# EUROPÄISCHE PATENTSCHRIFT

(11) **EP 2 567 126 B1**
(45) Veröffentlichungstag und Bekanntmachung des Hinweises auf die Patenterteilung: **07.05.2014**
(21) Anmeldenummer: 11713233.2
(22) Anmeldetag: 01.04.2011
(51) Int. Cl.: F16H 61/04, F16H 61/02

(54) **VERFAHREN ZUM DURCHFÜHREN EINES SCHALTVORGANGES BEI AUTOMATISIERTEN GETRIEBEN**
METHOD FOR CARRYING OUT A GEAR SHIFTING OPERATION IN AUTOMATED TRANSMISSIONS
PROCÉDÉ POUR METTRE EN OEUVRE UNE OPÉRATION DE CHANGEMENT DE VITESSE DANS DES TRANSMISSIONS AUTOMATISÉES

(30) Priorität: 06.05.2010 DE 102010028670
(43) Veröffentlichungstag der Anmeldung: 13.03.2013
(73) Patentinhaber: ZF Friedrichshafen AG, 88038 Friedrichshafen (DE)
(72) Erfinder: STEINBORN, Mario, 88046 Friedrichshafen (DE); SCHNEIDER, Florian, 88161 Lindenberg (DE)
(86) Internationale Anmeldenummer: PCT/EP2011/055090
(87) Internationale Veröffentlichungsnummer: WO 2011/138099

(56) Entgegenhaltungen:
- EP-A1- 2 058 558
- DE-A1- 10 124 989
- DE-A1- 19 932 052
- DE-A1-102006 030 157
- DE-A1-102006 054 516
- DE-A1-102007 007 257

## Beschreibung

Die vorliegende Erfindung betrifft ein Verfahren zum Durchführen eines Schaltvorganges bei einem automatisierten, zumindest formschlüssig schaltenden Getriebe eines Fahrzeuges gemäß der im Oberbegriff des Patentanspruches 1 näher definierten Art.

Aus der Fahrzeugtechnik ist es bekannt, dass bei automatisierten Getrieben, bei denen zumindest ein Getriebeteil als so genanntes Klauengetriebe ausgeführt ist, während eines Gangschaltvorganges ein Synchronvorgang mittels Aktoren hergestellt wird. Wenn sich das Fahrzeug an einer erheblichen Steigerung befindet oder ein großer Rollwiderstand vorliegt, z.B. während eines Geländeeinsatzes, kann das Fahrzeug während der Schaltung aufgrund der Zugkraftunterbrechung zum Stillstand kommen oder sogar zurückrollen. In derartigen Situationen ist es notwendig, den Getriebeeingang während des Synchronvorganges zu verzögern und danach entsprechend der Fahrzeuggeschwindigkeit und der Antriebsstrangübersetzung entgegen der Drehrichtung des Verbrennungsmotors zu beschleunigen. Beispielsweise aus der Druckschrift DE 10 2007 007 257 A1 ist bekannt, dass dazu eine elektrische Maschine verwendet wird, um bei derartig schwierigen Schaltvorgängen im Schaltgetriebe den Synchronvorgang trotzdem durchführen zu können. Dazu ist jedoch eine elektrische Maschine zwingend erforderlich, sodass diese Maßnahme bei Getrieben ohne elektrische Maschine nicht anwendbar ist. Zudem wird durch die Verwendung der elektrischen Maschine der Verbrauch in nachteiliger Weise erhöht.

Bei bekannten automatisierten Getrieben ohne elektrische Maschine wird davon ausgegangen, dass die Zieldrehzahl unabhängig von der Drehrichtung eingestellt wird. Dies führt dazu, dass es bei den oben erwähnten Schaltvorgängen zu unerwünschten Schaltgeräuschen oder sogar zum Abweisen der Schaltklaue kommen kann. Dadurch wird die Schaltqualität negativ beeinflusst.

Der vorliegenden Erfindung liegt die Aufgabe zu Grunde, ein Verfahren der eingangs beschriebenen Gattung vorzuschlagen, bei dem ohne den Einsatz einer zusätzlichen elektrischen Maschine der Synchronvorgang auch bei unterschiedlichen Drehrichtungen zwischen dem Getriebeeingang und dem Getriebeabtrieb durchgeführt wird.

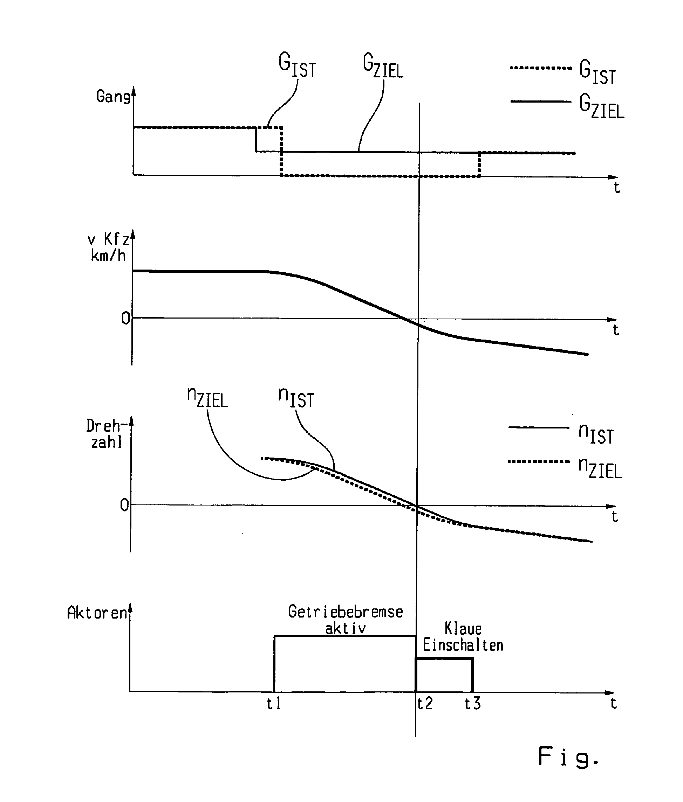

Diese Aufgabe wird erfindungsgemäß durch die Merkmale des Patentanspruches 1 gelöst, wobei sich weitere vorteilhafte Ausgestaltungen aus den Unteransprüchen und der Zeichnung ergeben.

Demnach wird ein Verfahren zum Schalten eines Zielganges bei einem automatisierten Getriebe mit zumindest einem formschlüssig schaltenden Getriebeteil eines Fahrzeuges vorgeschlagen, wobei auch andere Getriebeteile vorgesehen sein können. Bei dem Verfahren wird zum Schalten des Zielganges eine Drehzahlsynchronisierung zwischen der Getriebeeingangsdrehzahl und der abtriebsseitigen Drehzahl durchgeführt, wobei bei erkannter unterschiedlicher Drehrichtung zwischen dem Getriebeeingang und dem Abtrieb die Getriebeeingangsdrehzahl auf ein Minimum reduziert wird und wobei der Zielgang nur geschaltet wird, wenn die verbleibende Differenzdrehzahl zwischen der Getriebeeingangsdrehzahl und der abtriebsseitigen Drehzahl durch das formschlüssige Schaltelement des Getriebes zumindest im Wesentlichen synchronisiert bzw. ausgeglichen werden kann.

Im Rahmen des erfindungsgemäßen Verfahrens wird vor oder während eines Schaltvorganges die Drehrichtung erfasst, sodass ein möglicher Fahrtrichtungswechsel des Fahrzeuges während des Schaltvorganges detektiert werden kann. Auf diese Weise kann gegebenenfalls festgestellt werden, dass die Fahrtrichtung nicht zu dem zu schaltenden Gang passt. In einer derartigen Situation wird die Getriebeeingangsdrehzahl mithilfe des erfindungsgemäßen Verfahrens auf ein Minimum reduziert. Da bei einem konventionellen Getriebe ohne Elektromaschine keine Drehzahl mit Drehrichtung entgegen dem Verbrennungsmotor eingestellt werden kann, wird im weiteren Verfahren begonnen, den Zielgang einzulegen, obwohl die Istdrehzahl nicht der Solldrehzahl entspricht. Dies jedoch abhängig davon, ob das formschlüssige Schaltelement mechanisch in der Lage ist, die verbleibende Drehzahldifferenz selbst abbauen zu können.

Im Rahmen des vorgeschlagenen Verfahrens kann die Getriebeeingangsdrehzahl beispielsweise mit einer vorhandenen Getriebebremse oder auch mit dem Verbrennungsmotor des Fahrzeuges vorzugsweise auf den Wert Null im Rahmen des erfindungsgemäßen Synchronvorganges reduziert werden. Es ist beispielsweise auch möglich, dass die Reduzierung der Getriebeeingangsdrehzahl mithilfe der Anfahrkupplung des Fahrzeuges realisiert wird.

Um entscheiden zu können, ob das Schaltelement mechanisch in der Lage ist, die Drehzahldifferenz abbauen zu können, ist es im Rahmen einer nächsten Weiterbildung der Erfindung sinnvoll zumindest einen Grenzwert festzulegen, bis zu dem eine Schaltung noch durchführbar ist. Dazu wird die Differenzdrehzahl zwischen der aus dem Abtrieb berechneten Zieldrehzahl und der tatsächlichen Drehzahl bestimmt, bei der eine Schaltung noch sinnvoll ist, um ein Schalten bei akzeptierbarer Schaltzeit sicherzustellen. Als Grenzwert kann auch ein Drehzahlgradient z. B des Verlaufes der Getriebeeingangsdrehzahl berücksichtigt werden. Wenn der tatsächliche Drehzahlgradient einen Wert überschreitet, der größer oder nahe des Drehzahlgradienten der Synchronfunktion der Schaltklaue ist, ist dies ein Indiz für mögliche Schaltprobleme, so dass dann der Zielgang nicht geschaltet wird. Wenn mindestens eine der beiden genannten Grenzwerte erreicht wird, sollte die Getriebeschaltung beendet werden und das Getriebe in Neutral belassen werden.

Wenn der Schaltvorgang abgebrochen wird, ist es sinnvoll, den Fahrer über den Abbruch zu informieren, beispielsweise durch eine entsprechende Displayanzeige oder ein akustisches Warnsignal, so dass der Fahrer darauf geeignet reagieren kann. Vorzugsweise kann bei der Erkennung einer derartigen Situation eine Warnmeldung auch vorab dem Fahrer übermittelt werden, damit dieser sich bereits frühzeitig auf die Möglichkeit einer Neutralschaltung einstellen kann.

Das vorgeschlagene Verfahren kann vorzugsweise bei automatisierten Getrieben mit zumindest einem Klauengetriebeteil beispielsweise bei Nutzfahrzeugen oder einem Bus eingesetzt werden. Es sind auch andere Verwendungsmöglichkeiten denkbar.

Die vorliegende Erfindung wird anhand der Zeichnung weiter erläutert. Die einzige Figur der Erfindung zeigt eine Darstellung mit verschiedenen Diagrammen, in denen der Gangverlauf, der Fahrzeuggeschwindigkeitsverlauf, die Drehzahlverläufe und der Betätigungsverlauf der Aktoren zum Durchführen des Synchronvorganges über die Zeit dargestellt sind. Exemplarisch sind die Verläufe für eine Rückschaltung gezeigt, bei der das Fahrzeug während der Schaltung beginnt zurückzuholen. Jedoch ist das vorgeschlagene Verfahren ebenso bei einer Hochschaltung einsetzbar.

In der Figur ist in dem oberen Diagramm der aktuell eingelegte Gang erkennbar, indem ein Istgangverlauf G_{IST} mit einer gestrichelten Linie und ein Zielgangverlauf G_{ZIEL} mit einer durchgezogenen Linie angedeutet sind. Aus den beiden Verläufen ist ersichtlich, dass das Getriebe zum Zeitpunkt t₁ nach Neutral geschaltet wird und erst zum Zeitpunkt t₃ nach Beenden der Synchronisierung in den Zielgang geschaltet wird.

Aus den Verläufen der Fahrzeuggeschwindigkeit V_{KFZ} und den Verläufen der Istdrehzahl n_{IST} und der Zieldrehzahl N_{ZIEL} am Getriebeeingang in den mittleren Diagrammen ist ersichtlich, dass während des Schaltvorganges eine Fahrtrichtungsumkehr erfolgt. Dies wird auch durch die Drehzahlverläufe angedeutet.

Das untere Diagrammen in der Figur zeigt das Aktivieren der Getriebebremse zum Zeitpunkt t₁ bis zum Zeitpunkt t₂, um die Getriebeeingangsdrehzahl auf den Wert Null zu reduzieren. Ab dem Zeitpunkt t2 bis zum Zeitpunkt t3 wird das Klauenschaltelement zum Ausgleichen der verbleibenden Drehzahldifferenz aktiviert, um schließlich zum Zeitpunkt t₃ den Zielgang zum Abschluss des Schaltvorganges einzulegen.

Die in der Figur dargestellte Rückschaltung beginnt somit mit dem Auslegen des Ganges zum Zeitpunkt t₁. Sobald das Getriebe sich in Neutral befindet, wird die Getriebebremse aktiviert, um die Zieldrehzahl N_{ZIEL} einzustellen. Die Zieldrehzahl N_{ZIEL} ergibt sich hierbei aus der Abtriebsdrehzahl und somit der Fahrzeuggeschwindigkeit V_{KFZ} und der Übersetzung des Zielganges G_{ZIEL}. Ab dem Zeitpunkt t₂, an dem die Eingangsdrehzahl dem Wert Null entspricht, ist eine weitere Ansteuerung der Getriebebremse nicht mehr notwendig. Die verbleibende Drehzahldifferenz zwischen der Istdrehzahl n_{IST} und der Zieldrehzahl n_{ZIEL} wird nun durch die Schaltklaue abgebaut, um den Synchronvorgang abzuschließen. Auf diese Weise wird mit dem erfindungsgemäßen Verfahren ein Synchronvorgang bei einem automatisierten Klauengetriebe mit Fahrtrichtungswechsel ohne zusätzliche Elektromaschine realisiert.

### Bezugszeichen

- n_{IST}: Istdrehzahl am Getriebeeingang
- n_{ZIEL}: Zieldrehzahl am Getriebeeingang
- G_{IST}: Istgang
- G_{ZIEL}: Zielgang
- t₁: Zeitpunkt Beginn Synchronvorgang
- t₂: Zeitpunkt Drehzahlumkehr
- t₃: Zeitpunkt Ende Synchronvorgang

## Patentansprüche

1. Verfahren zum Durchführen eines Schaltvorganges bei einem automatisierten Getriebe mit zumindest einem formschlüssig schaltenden Getriebeteil eines Fahrzeuges, bei dem zum Schalten eines Zielganges (G_{ZIEL}) eine Drehzahlsynchronisierung zwischen der Getriebeeingangsdrehzahl und der abtriebsseitigen Drehzahl durchgeführt wird, **dadurch gekennzeichnet, dass** bei erkannter unterschiedlicher Drehrichtung zwischen dem Getriebeeingang und dem Getriebeabtrieb die Getriebeeingangsdrehzahl auf ein Minimum reduziert wird und dass der Zielgang (G_{ZIEL}) nur geschaltet wird, wenn die verbleibende Differenzdrehzahl zwischen der Getriebeeingangsdrehzahl und der abtriebsseitigen Drehzahl durch das formschlüssige Schaltelement zumindest im Wesentlichen synchronisierbar ist.

2. Verfahren nach Anspruch 1, **dadurch gekennzeichnet, dass** die Getriebeeingangsdrehzahl mit einer Getriebebremse oder dem Verbrennungsmotor des Fahrzeuges auf den Wert Null reduziert wird.

3. Verfahren nach einem der vorangehenden Ansprüche, **dadurch gekennzeichnet, dass** ein Grenzwert für die verbleibende Drehzahldifferenz festgelegt wird, bis zu dem eine Schaltung durchgeführt wird.

4. Verfahren nach Anspruch 3, **dadurch gekennzeichnet, dass** als Grenzwert ein Drehzahlgradient für den Verlauf der Getriebeeingangsdrehzahl verwendet wird.

5. Verfahren nach einem der Ansprüche 3 oder 4, **dadurch gekennzeichnet, dass** bei Überschreitung des festegelegten Grenzwertes der Schaltvorgang abgebrochen wird und die Neutralposition bei dem Getriebe beibehalten wird.

6. Verfahren nach Anspruch 5, **dadurch gekennzeichnet, dass** der Abbruch des Schaltvorganges dem Fahrer signalisiert wird.

7. Verfahren nach einem der vorangehenden Ansprüche, **dadurch gekennzeichnet, dass** es bei einem automatisierten Getriebe mit zumindest einem Klauengetriebeteil bei einem Nutzfahrzeug oder eine Bus eingesetzt wird.

## Claims

1. Method for carrying out a gear shifting operation in an automated transmission having at least one positively shifting transmission part of a vehicle, in which, in order to shift a target gear (G_{ZIEL}), rotational speed synchronization between the transmission input rotational speed and the output-side rotational speed is carried out, **characterized in that**, when a different direction of rotation is detected between the transmission input and the transmission output, the transmission input rotational speed is reduced to a minimum, and **in that** the target gear (G_{ZIEL}) is shifted only when the remaining differential rotational speed between the transmission input rotational speed and the output-side rotational speed can be at least essentially synchronized by means of the positive shift element.

2. Method according to Claim 1, **characterized in that** the transmission input rotational speed is reduced to the value zero by means of a transmission brake or the internal combustion engine of the vehicle.

3. Method according to one of the preceding claims, **characterized in that** a limit value for the remaining rotational speed difference is fixed, up to which a shift is carried out.

4. Method according to Claim 3, **characterized in that** the limit value used is a rotational speed gradient for the profile of the transmission input rotational speed.

5. Method according to either one of Claims 3 and 4, **characterized in that**, when the fixed limit value is overshot, the gear shifting operation is discontinued and the neutral position is maintained in the transmission.

6. Method according to Claim 5, **characterized in that** the discontinuation of the gear shifting operation is signalled to the driver.

7. Method according to one of the preceding claims, **characterized in that** it is used in an automated transmission with at least one dog-type transmission part in a commercial vehicle or a bus.

## Revendications

1. Procédé pour mettre en oeuvre une opération de commutation dans une boîte de vitesses automatisée comprenant au moins une partie de boîte de vitesses d'un véhicule commutant par engagement positif, dans lequel, pour la commutation d'un rapport cible (G_{ZIEL}), une synchronisation de vitesse de rotation est réalisée entre la vitesse de rotation à l'entrée de la boîte de vitesses et la vitesse de rotation du côté de la prise de force, **caractérisé en ce que** dans le cas où un sens de rotation différent est reconnu entre l'entrée de la boîte de vitesses et la prise de force de la boîte de vitesses, la vitesse de rotation à l'entrée de la boîte de vitesses est réduite à un minimum et **en ce que** le rapport cible (G_{ZIEL}) n'est commuté que lorsque la différence de vitesse de rotation restante entre la vitesse de rotation à l'entrée et la vitesse de rotation du côté de la prise de force peut au moins sensiblement être synchronisée par l'élément de commutation à engagement positif.

2. Procédé selon la revendication 1, **caractérisé en ce que** la vitesse de rotation à l'entrée de la boîte de vitesses est réduite à zéro avec un frein de boîte de vitesses ou avec le moteur à combustion interne du véhicule.

3. Procédé selon l'une quelconque des revendications précédentes, **caractérisé en ce que** l'on établit une valeur limite pour la différence de vitesse de rotation restante, jusqu'à laquelle une commutation est réalisée.

4. Procédé selon la revendication 3, **caractérisé en ce que** l'on utilise comme valeur limite un gradient de vitesse de rotation pour la courbe de la vitesse de rotation à l'entrée de la boîte de vitesses.

5. Procédé selon l'une quelconque des revendications 3 ou 4, **caractérisé en ce que** lors du dépassement de la valeur limite établie, l'opération de commutation est interrompue et la position neutre est conservée au niveau de la boîte de vitesses.

6. Procédé selon la revendication 5, **caractérisé en ce que** l'interruption de l'opération de commutation est signalisée au conducteur.

7. Procédé selon l'une quelconque des revendications précédentes, **caractérisé en ce qu'**il est utilisé avec une boîte de vitesses automatisée avec au moins une partie de boîte de vitesses à crabots dans un véhicule utilitaire ou un bus.
